# EUROPEAN PATENT APPLICATION

(11) **EP 1 122 481 A2**
(43) Date of publication of application: **08.08.2001**
(21) Application number: 01100437.1
(22) Date of filing: 08.01.2001
(51) Int. Cl.: F16L 11/15

(54) **Corrugated flexible hose for gaseous substances and method therefor**

(30) Priority: 02.02.2000 IT MI000159
(71) Applicant: Tamborini, Ariberto, 21020 Daverio (Varese) (IT); Tamborini, Giancarlo, 21020 Daverio (Varese) (IT)
(72) Inventor: Tamborini, Ariberto, 21020 Daverio (Varese) (IT); Tamborini, Giancarlo, 21020 Daverio (Varese) (IT)
(74) Representative: Cicogna, Franco

(57) **Abstract**

The present invention relates to a corrugated flexible hose for gaseous substances in general, comprising a flexible tubular body (10) having a plurality of surface corrugations.

The invention also relates to a method for making the corrugated flexible hose.

The main feature of the invention is that the corrugated flexible hose comprises, on the outer surface of the tubular body (10) thereof, at least a longitudinal recess (11) for engaging therein an auxiliary tube (15) for conveying therethrough a fluid, or for allowing cables to pass therethrough.

## Description

### BACKGROUND OF THE INVENTION

The present invention relates to a corrugated flexible hose or tube for gaseous substances in general, and the related making method.

As is known, flexible hoses are conventionally used for a plurality of applications, said flexible hoses conventionally comprising a plastics material tubular body, having a plurality of corrugations through the surface thereof.

In combination with the mentioned gaseous substances conveying tubes, it is, very frequently, necessary to use other elements such as hydraulic drives, or power electric cables which, for preventing them from hindering the user, are usually coupled to the corrugated flexible hose by clamping elements or the like, thereby a lot of labour is required with a consequent great cost and possible constructional defects.

### SUMMARY OF THE INVENTION

Accordingly, the aim of the present invention is to overcome the above mentioned drawbacks, by providing a method for making a corrugated flexible hose, which has very good resilient characteristics and which, moreover, allows to overcome, by a single element, all the problems related to the drive elements to be used.

Within the scope of the above mentioned aim, a main object of the present invention is to provide such a corrugated flexible hose which, while having very good operating features, is greatly lighter and much more inexpensive than conventional hoses, with the additional advantage of having very good handling characteristics.

Yet another object of the present invention is to provide such a corrugated flexible hose which is very reliable and safe in operation.

Yet another object of the present invention is to provide such a corrugated flexible hose which can be easily made starting from easily available elements and materials, and which, moreover, is very competitive from a mere economic standpoint.

According to one aspect of the present invention, the above mentioned aim and objects, as well as yet other objects, which will become more apparent hereinafter, are achieved by a corrugated flexible hose for gaseous substances in general, comprising a tubular flexible body having a plurality of corrugations through the surface thereof, and being characterized in that said corrugated flexible hoses further comprise, on said surface of said tubular body, a longitudinal recess, for engaging therein an auxiliary tube for conveying a fluid or allowing cables to pass therethrough.

### BRIEF DESCRIPTION OF THE DRAWINGS

Further characteristics and advantages of the corrugated flexible hose and the method for making it according to the present invention will become more apparent hereinafter from the following detailed disclosure of a preferred, though not exclusive, embodiment thereof, with reference to the accompanying drawings, where:

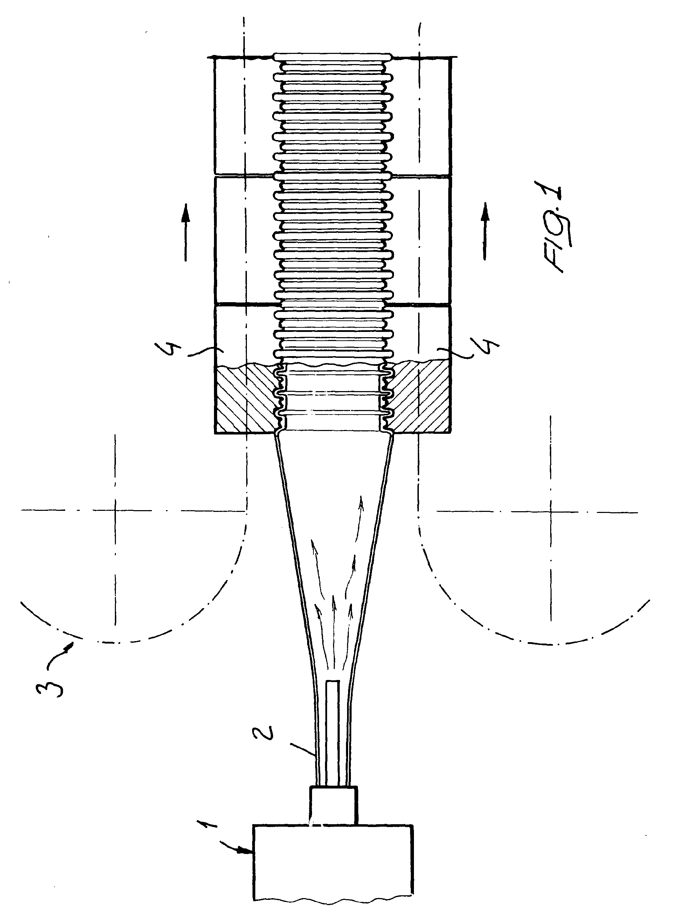

Figure 1 is a schematic view illustrating the construction of the corrugated flexible hose according to the invention;
Figure 2 is a further schematic enlarged view illustrating, in cross section, a detail of the tube and of the corrugating devices;

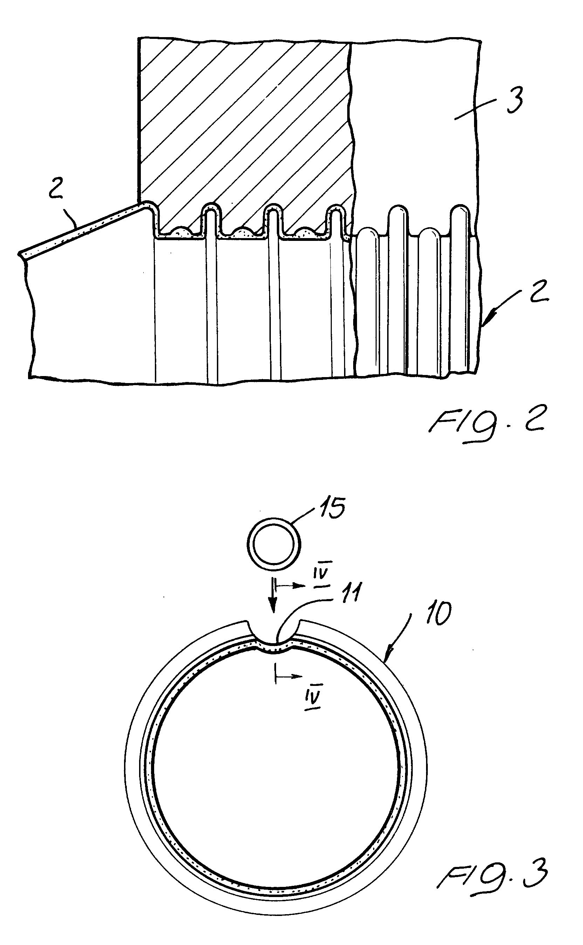

Figure 3 is a cross sectional view illustrating the flexible hose and auxiliary tube therefor;
Figure 4 is a cross sectional view substantially taken along the section line IV-IV of figure 3;
Figure 5 is a further cross sectional view illustrating the flexible hose and the auxiliary tube associated therewith; and

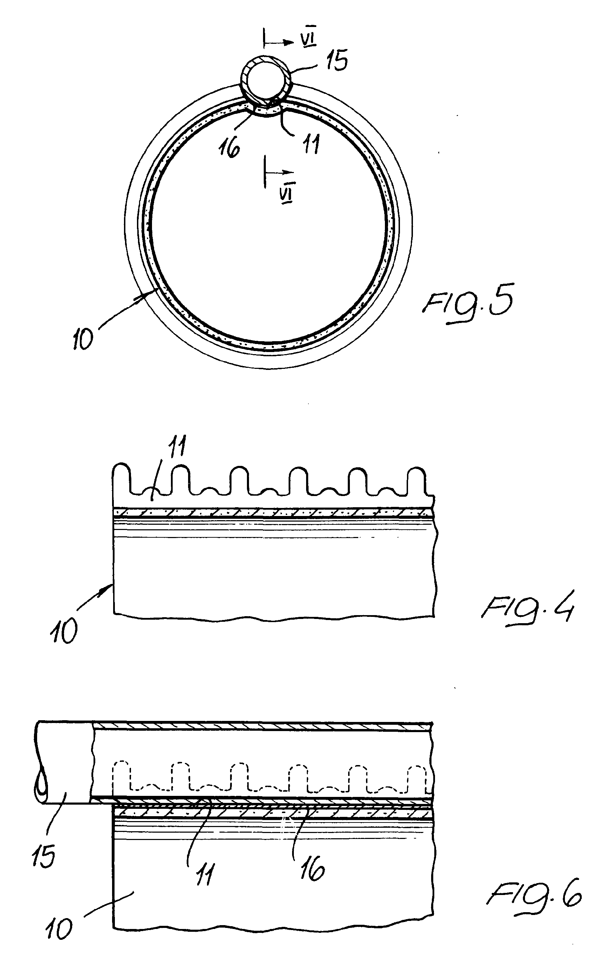

Figure 6 is a further cross-sectional view substantially taken along the line VI-VI of figure 5.

### DESCRIPTION OF THE PREFERRED EMBODIMENT

With reference to the number references of the accompanying figures, the corrugated flexible hose for gaseous substances in general according to the present invention is made by a making method providing to use an extruding device, generally indicated by the reference number 1, therefrom a tubular film material 2 is extruded, said film material being advantageously made of a polyethylene and ethylvinylacetate mixture, or a PVC or ethylvinylacetate or polyurethane resin material, or a copolymer material, adapted to provide the hose with suitable resilient or flexibility properties.

According to the inventive method, the tubular film 2 is processed by a corrugating apparatus or device, generally indicated by the reference number 3, including a plurality of corrugating molds 4, engaging with the outer surface of the tubular film 2, in the inside of which air is blown, thereby providing the surface of the tubular body 10 with the desired corrugations.

More specifically, the tubular film 2, at the outlet of the extruding device 1, enters the corrugating apparatus 3 and assumes the shape provided by the corrugating molds, owing to the blowing of environment temperature air, which is conveyed, at a set pressure, inside the tubular film.

A main feature of the invention is that the tubular body 10, in addition to being provided with a plurality of corrugations, defines, on a surface portion thereof, at least a bas-relief recess 11, forming a region for engaging therein an auxiliary tube 15, which is applied through the interposition of an adhesive material or hot melt resin layer 16.

Thus, the mentioned tube element will be firmly held associated with the tubular body.

In particular, said auxiliary tube 15 is made of any suitable plastics material, suitable to allow it to be easily and firmly glued to the larger diameter tube.

Said auxiliary tube can be used both for conveying cleaning liquids or drive fluids therethrough, and, optionally, as a sheath for holding therein electric cables.

Thus, a corrugated flexible hose is provided, which has very good operating features and a weight much smaller than that of conventional hoses, and which can be easily used and made at a very low cost.

From the above disclosure it should be apparent that the invention fully achieves the intended aim and objects.

In particular, it should be apparent that the main feature of the invention is that of providing on the outer surface of the flexible tubular body a longitudinal recess for receiving therein an auxiliary tube.

The tubular flexible body, in particular, is made of any materials suitable to provide said tubular body with very good resilient features.

The hose assembling operations, moreover, are very simple, and a tube assembly is obtained thereby having very good operating features.

If required, it would be possible to provide a plurality of recesses 15 for engaging therein auxiliary tubes, said additional recesses 15 being distributed through the periphery of the tubular body according to any desired pattern.

The invention, as disclosed, is susceptible to several modifications and variations, all of which will come within the scope of the invention.

Moreover, all the constructional details can be replaced by other technically equivalent elements.

In practicing the invention, the used materials, provided that they are compatible to the intended use, as well as the contingent size and shapes, can be any, according to requirements.

## Claims

1. A corrugated flexible hose for gaseous substances in general, comprising a tubular flexible body having a plurality of corrugations through the surface thereof, and being characterized in that said corrugated flexible hoses further comprises, on said surface of said tubular body, a longitudinal recess, for engaging therein an auxiliary tube for conveying a fluid or allowing cable to pass therethrough.

2. A corrugated flexible hose, according to the preceding claim, characterized in that said recess longitudinally extends on said tubular flexible body.

3. A corrugated flexible hose, according to Claims 1 and 2, characterized in that an adhesive or hot melt material is applied on said corrugated flexible hose to connect said auxiliary tube to be partially engaged in said longitudinally extending recess.

4. A corrugated flexible hose, according to one or more of the preceding claims, characterized in that said tubular body is made of polyethylene and ethylenvinylacetate mixtures.

5. A corrugated flexible hose, according to one or more of the preceding claims, characterized in that said tubular body is made of a polyvinylchloride material.

6. A corrugated flexible hose, according to one or more of the preceding claims, characterized in that said tubular body is made of ethylenvinylacetate.

7. A corrugated flexible hose, according to one or more of the preceding claims, characterized in that said tubular body is made of polyurethane resins or copolymers suitable to provide said hose with desired resilient properties.

8. A method for making a corrugated flexible hose for gaseous substances in general, characterized in that said method provides to use an extruder device for extruding a tubular film, said tubular film being made of a polyethylene and ethylvinylacetate mixture, or optionally a PVC or an ethylvinylacetate material, polyurethane resins or copolymers thereof, to provide said hose with desired resilient properties, said extruded tubular film being processed in a corrugating apparatus including a plurality of corrugating molds engaging an outer surface of said tubular film.

9. A method according to Claim 8, characterized in that said tubular film is processed by a corrugating apparatus the corrugating molds of which engage the outer surface of said tubular film, air being blown inside said tubular film thereby forming on the surface of said tubular body a plurality of corrugations.

10. A method according to Claims 8 and 9, characterized in that said tubular film, exiting from said extruder device, enters said corrugating apparatus to be shaped by said corrugating molds with a blowing of environment temperature air, conveyed at a desired pressure inside said tubular film.

11. A method according to one or more of the preceding claims, characterized in that said method provides to form a corrugated flexible hose which, in addition to being provided with a plurality of corrugations, defines, on an outer surface portion thereof, at least a longitudinally extending bas-relief recess.

12. A method for making a corrugated flexible hose, according to one or more of the preceding claims, characterized in that in said bas-relief seat at least an auxiliary tube is engaged through the interposition of a hot melt resin material layer.

13. A method for making a corrugated flexible hose, according to one or more of the preceding claims, characterized in that said auxiliary tube is firmly glued to said tubular body, said auxiliary tube being made of a compatible plastic material, to allow said auxiliary tube to be glued to the larger diameter tube or hose.

14. A method according to one or more of the preceding claims, characterized in that said method comprises the step of applying to a larger diameter hose an auxiliary small tube by glueing said auxiliary small tube to said larger diameter hose, to use said auxiliary small tube both for conveying cleaning liquids or drive fluid therethrough and possibly as a sheath for holding electric cables therein.

15. A method for making a corrugated flexible hose characterized in that said corrugated flexible hose comprises, on an outer surface thereof, a plurality of recesses for engaging therein a plurality of small tubes, said recesses being distributed through a periphery of said tubular body according to any desired pattern.

16. A corrugated flexible hose for gaseous substances in general, according to one or more of the preceding claims, and substantially as broadly disclosed and illustrated, and for the intended aim and objects.
